# EUROPEAN PATENT SPECIFICATION

(11) **EP 0 818 672 B1**
(45) Date of publication and mention of the grant of the patent: **02.05.2003**
(21) Application number: 97500121.5
(22) Date of filing: 09.07.1997
(51) Int. Cl.: G01L 7/04

(54) **Bourdon tube for protection against excess pressure in pressure gauges**
Drucksensor mit Bourdonrohr zum Schutz gegen Überdruck
Capteur de pression à tube Bourdon de protection contre des surpressions

(30) Priority: 12.07.1996 ES 9601911 U
(43) Date of publication of application: 14.01.1998
(73) Proprietor: Aldiso, S.L., 08224 Terrassa (ES)
(72) Inventor: Banus Garcia, Fernando, 08224 Terrassa (ES)
(74) Representative: Ponti Sales, Adelaida

(56) References cited:
- CH-A- 559 907
- DE-A- 2 321 956

## Description

The present invention relates to a Bourdon tube for protection against excess pressure in pressure gauges.

### BACKGROUND OF THE INVENTION

The Bourdon tube is a tube of elastic material fitted inside the pressure gauge and defining an enclosure inside which a fluid under pressure circulates causing the deformation of said tube and consequently the displacement of the pointer needle of the pressure gauge.

Apparatus that are subject to the pressure of gases must comply with certain safety standards, due to the risk involved in their handling.

In particular, in the case of pressure gauges, provision must be made to prevent any accidental excess pressure which could lead to the breakage of the Bourdon tube and to the release and outward projection of parts of the pressure gauge such as the glass closing the housing. Said accidental excess pressure might arise, for example, if a low-pressure (2.5 bar) pressure gauge intended for an acetylene bottle is by mistake connected to an oxygen bottle which can be at a pressure of 200 bar. European standard EN562 establishes the excess pressure conditions which a pressure gauge must fulfil.

Several solutions have been proposed in order to fulfil said excess pressure conditions.

One solution consists in fitting the closure glass in the housing in such a way that it withstands any excess pressures and thus prevents the glass or other parts from being projected outside the pressure gauge.

This solution has the disadvantage that it is difficult, owing to manufacturing tolerances, to ensure such fitting on all mass-produced pressure gauges.

Another solution, described in European patent EP 0 501 186 consists in fitting inside the Bourdon tube a member which at a certain pressure (lower than the maximum accidental excess pressure and higher than the maximum gauge pressure) leads to breakage of the Bourdon tube and allows the gas to escape in the housing at a pressure not considered to be dangerous.

Said solution is relatively expensive because said member leading to breakage of the Bourdon tube has to be inserted in the tube.

CH-A-559 907 refers to a manometer whose Bourdon tube has one or several controlled breakage points. In this way, the breakage of the Bourdon tube can be achieved at these points of smaller thickness and, therefore, at a lower pressure.

However, these breakage points are made by a subsequent machining of the tube after its obtention by extrusion, which is a very difficult operation.

### DESCRIPTION OF THE INVENTION

The Bourdon tube of the invention solves the above drawbacks.

The Bourdon tube of the present invention is characterized in that the portion of smaller thickness is a recess having a circular section and extending along the tube wall.

Breakage of the Bourdon tube is thus achieved at this weaker portion and at a remarkably lower pressure. The pressure discharged into the inner section of the housing is therefore also lower and its effects are more easily controllable.

This solution does not call for the fitting of any part inside the Bourdon tube and permits easy mass machining, with attendant reduction of manufacturing cost.

The portion of smaller thickness is preferably formed on the same tube used as raw material for subsequent processing to make the Bourdon tube. In particular, the circular recess can be made in the way indicated.

This mode of embodiment is especially advantageous due to its low manufacturing cost.

### BRIEF DESCRIPTION OF THE DRAWINGS

For a better understanding of all that has been outlined, some drawings showing schematically and solely by way of non-restrictive example a practical case of embodiment are attached.
Figure 1 shows a partially sectioned pressure gauge within which the Bourdon tube can be seen;
Figure 2 is a detail of the Bourdon tube of the invention fitted in its support; and
Figure 3 shows a section along plane III-III of Figure 2 and an enlarged detail of the recess on the wall of the tube.

### DESCRIPTION OF A PREFERRED EMBODIMENT

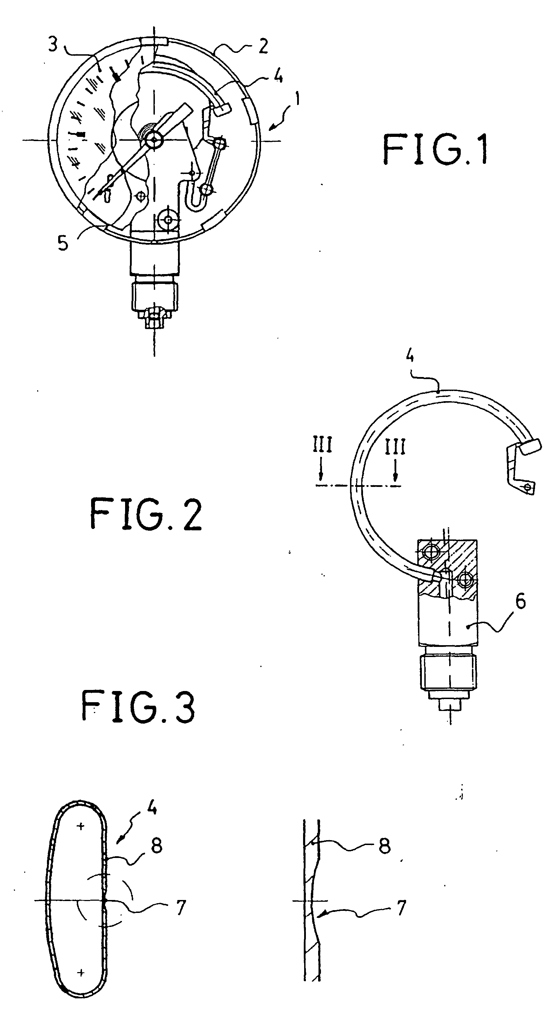

As shown in Figure 1, the pressure gauge 1 essentially comprises a housing 2, enclosed at its front side by a glass 3, and a Bourdon tube 4 which defines an enclosure inside which there circulates a gas under pressure causing deformation of said tube and consequently a displacement of the pointer needle 5.

In Figure 2 the Bourdon tube 4 can be seen fitted on a support 6 which has the section shown in Figure 3, which Figure also shows a recess 7 which extends along the wall 8 of the tube.

As can be seen in the enlarged detail of Figure 3, the wall 8 of the tube has a smaller thickness in the portion of the recess 7, so that the tube breaks at said portion when the pressure reaches a predetermined value, lower than the excess pressure considered to be dangerous according to the safety regulations.

## Claims

1. Bourdon tube for protection against excess pressure in pressure gauges (1), which defines an enclosure inside which a fluid under pressure circulates, causing the deformation of said tube (4) and consequently the displacement of the pointer needle (5) of the pressure gauge, the wall (8) of the tube being provided with at least one portion (7) of smaller thickness, **characterized in that** the portion of smaller thickness is a recess (7) having a circular section and extending along the tube wall (8).

2. Bourdcn tube as claimed in Claim 1,
**characterized in that** the portion of smaller thickness (7) is formed on the same tube used as raw material for subsequent processing to make the Bourdon tube (4).

## Patentansprüche

1. Federrohr zum Schutz gegen Überdruck in Druckmessern (1), welches ein Gehäuse bildet, in dem ein Fluid unter Druck zirkuliert, was das Verformen des Rohrs (4) und konsequenterweise die Verlagerung der Zeigernadel (5) des Druckmessers verursacht, wobei die Wand (8) des Rohrs mit wenigstens einem Abschnitt (7) geringerer Dicke versehen ist, **dadurch gekennzeichnet, dass** der Abschnitt geringerer Dicke eine Ausnehmung (7) ist, die einen kreisförmigen Abschnitt besitzt und sich längs der Rohrwand (8) erstreckt.

2. Federrohr nach Anspruch 1, **dadurch gekennzeichnet, dass** der Abschnitt der geringeren Dicke (7) auf demselben Rohr gebildet ist, das als Rohmaterial für das darauffolgende Verarbeiten zur Herstellung eines Federrohrs (4) benutzt worden ist.

## Revendications

1. Tube Bourdon pour une protection contre un excès de pression dans des manomètres à pression (1), qui définit une enceinte à l'intérieur de laquelle circule un fluide sous pression, causant la déformation dudit tube (4) et par conséquent le déplacement de l'aiguille pointeuse (5) du manomètre de pression, la paroi (8) du tube étant munie au moins d'une portion (7) d'épaisseur plus faible, **caractérisé en ce que** la partie d'épaisseur plus faible est un évidement (7) possédant une section circulaire et s'étendant le long de la paroi de tube (8).

2. Tube Bourdon comme revendiqué dans la revendication 1, **caractérisé en ce que** la partie de plus faible épaisseur (7) est formée sur le même tube utilisé comme matière première pour un traitement ultérieur en vue de fabriquer le tube Bourdon (4).
